# EUROPEAN PATENT SPECIFICATION

(11) **EP 2 383 057 B1**
(45) Date of publication and mention of the grant of the patent: **01.10.2014**
(21) Application number: 11161114.1
(22) Date of filing: 05.04.2011
(51) Int. Cl.: B22F 1/00, A61Q 17/04, B41M 5/42

(54) **Flat metal particle-containing composition and heat ray-shielding material**
Flache metallteilchenhaltige Zusammensetzung und Wärmestrahlen abschirmendes Material
Composition contenant des particules métalliques plates et matériau de protection contre les rayons de chaleur

(30) Priority: 06.04.2010 JP 2010088187
(43) Date of publication of application: 02.11.2011
(73) Proprietor: FUJIFILM Corporation, Tokyo 106-8620 (JP)
(72) Inventor: Funakubo, Takeshi, Kanagawa (JP); Hosoya, Yoichi, Kanagawa (JP)
(74) Representative: HOFFMANN EITLE

(56) References cited:
- WO-A1-2008/118947
- WO-A1-2009/122467
- JP-A- 11 080 647
- US-A1- 2007 074 316

## Description

### BACKGROUND OF THE INVENTION

### Field of the Invention

The present invention relates to a flat metal particle-containing composition suitable to, for example, a heat ray reflection films, an infrared ray reflection film, a visible light reflection films, a heat ray absorption films, an infrared ray absorption film and a selective reflection film and to a heat ray-shielding material selectively reflecting and absorbing heat rays.

### Description of the Related Art

Nanoparticles have a size smaller than wavelengths of light and thus attract attention as a material with low light scattering. Among others, research has been made on metal nanoparticles in various fields, since they have electrical conductivity, thermal conductivity, favorable refractive index, catalytic activity, and other features.

The metal nanoparticles have a large surface area and often pose problematic corrosion and migration. For example, U.S. Pat. Application Publication No. 2007/0074316 discloses that an aromatic triazole compound and the like are advantageous as a corrosion inhibitor for Ag nanowires.

Also, Japanese Patent Application Laid-Open (JP-A) No. 2009-146678 discloses that a benzotriazole compound is advantageous as a migration inhibitor.

These prior art documents present solutions against migration or corrosion causing insulation when Ag is used as a conductive material. However, they neither disclose nor suggest stability relating to light resistance as seen in the present invention.

Moreover, Japanese Patent (JP-B) No. 3594803 discloses a paint utilizing plasmon absorption of a noble metal by mixing a noble metal colloid with a resin. JP'B No. 3594803 neither discloses nor suggests that plasmon of noble metal nanoparticles is unstable for light resistance, since a specific light resistance improver is not used in the noble metal colloid.

WO 2008/118947 teaches a composition comprising 81.5% silver flake and 0.7 imidazole. A similar composition is disclosed in Comparison Example 4 of WO-A-2009/122467.

JP-A-11-080647 teaches a colloidal solution obtained by incorporating colloidal particles of for instance gold, silver, platinum or copper together with a high molecular weight pigment dispersant such as a macromolecule having a comb structure.

US-A-2007/0074316 discloses the synthesis of silver nano wires by the reduction of silver nitrate dissolved in ethylene glycol in the presence of poly(vinyl pyrrolidone).

Therefore, at present, demand has arisen for provision of a flat metal ` particle-containing composition in which flat metal particles exist more stably and reduction of plasmon reflection due to light can be prevented: and a heat ray-shielding material which has high selectivity for reflection wavelength or region, has excellent transmittance with respect to visible light and radio wave, and has excellent light resistance.

### BRIER SUMMARY OF THE INVENTION

The present invention aims to provide a flat metal particle-containing composition in which flat metal particles exist more stably and reduction of nlasrsaon reflection due to light can be prevented and which can be suitably used in, for example, a heat ray reflection nlm_{;} an infrared ray reflection film, a visible light reflection film, a heat ray absorption film, an infrared ray absorption film and a selective reflection film; and a heat ray-shielding material which has high selectivity for reflection wavelength or region, has excellent transmittance with respect to visible light and radio wave, and has excellent light resistance.

The present inventors conducted studies on a reflection film utilizing plasmon reflection in order to solve the above existing problems, and have found that nanosized noble metal particles (including flat metal nanoparticles) are degraded in light resistance. One possible reason for degradation of the noble metal nanoparticles in light resistance lies in the reduction of stability due to increasing of surface energy with increasing specific surface areas. In this case, it is difficult to protect the noble metal by adding a large amount of a resin to the composition. Thus, the present inventors conducted extensive studies, and as a result have found that by incorporating into flat metal particles a heterocyclic ring compound having a silver interaction potential EAg of -1 mV or lower, stability of flat metal particles is increased, reduction of plasmon reflection due to light can be prevented, and better light resistance can be attained.

According to a first aspect, the present invention provides a composition comprising:
flat metal particles having two main planes, and
a heterocyclic ring compound having a silver interaction potential EAg which is lower than -1 mV;
wherein the average particle diameter of the flat metal particles is from 70 nm to 500 nm, and the value L/d of the flat metal particles is from 2 to 80, where L denotes the average particle diameter of the flat metal particles and d denotes the average particle thickness of the flat metal particles.

Preferably the silver interaction potential EAg of the heterocyclic ring compound is -300 mV or higher but lower than -1 mV.

Preferably the flat metal particles contain silver, gold, copper or an alloy thereof.

Preferably the flat metal particles contain silver.

According to a second aspect, the present invention provides the use of a composition according to the above first aspect as a heat ray reflection film, an infrared ray reflection film, a heat ray absorption film, an infrared ray absorption film or a selective reflection film.

According to a third aspect, the present invention provides a heat ray-shielding material comprising a substrate and a layer of the composition as defined in the above first aspect on the substrate.

Preferably the main planes of the flat metal particles in the composition are plane-oriented at 0° to ±30° with respect to a surface of the substrate.

Preferably the material has an area ratio of 15% or higher, the area ratio being calculated by B/A x 100, where A and B denote the projected area of the substrate and the total value of projected areas of the flat metal particles, respectively, when the heat ray-shielding material is viewed from a perpendicular direction.

The present invention can provide a flat metal particle-containing composition in which flat metal particles exist more stably and reduction of plasmon reflection due to light can be prevented and which can be suitably used in, for example, a heat ray reflection film, an infrared ray reflection film, a visible light reflection film, a heat ray absorption film, an infrared ray absorption film and a selective reflection film; and a heat ray-shielding material which has high selectivity for reflection wavelength or region, has excellent transmittance with respect to visible light and radio wave, and has excellent light resistance.

### BRIEF DESCRIPTION OF THE DRAWINGS

Fig. 1A is a schematic perspective view of a disc-like flat particle which is one exemplary flat metal particle.
Fig. 1B is a schematic perspective view of a substantially hexagonal flat particle which is one exemplary flat metal particle.
Fig. 2A is a schematic cross-sectional view of a metal particle-containing layer containing flat metal particles in a heat ray-shielding material of the present invention, where the flat metal particles exist in an ideal state.
Fig. 2B is a schematic cross-sectional view of a metal particle-containing layer containing flat metal particles in a heat ray-shielding material of the present invention, which is for explaining angles (θ) formed between a surface of a substrate and planes of flat particles
Fig. 2C is a schematic cross-sectional view of a metal particle-containing layer containing flat metal particles in a heat ray-shielding material of the present invention, which illustrates a region where the flat metal particles exist in a depth direction of the metal particle-containing layer of the heat ray-shielding material.

### DETAILED DESCRIPTION OF THE INVENTION

### (Flat metal particle-containing composition)

A flat metal particle-containing composition of the present invention includes at least flat metal particles and a heterocyclic ring compound having a silver interaction potential EAg lower than -1 mV; and, if necessary, further includes other components.

### <Flat metal particle>

In general, nanoparticles are classified into 0-dimensional particles (substantially spherical), 1-dimensional particles (substantially rod), 2-dimensional particles (substantially flat) and 3-dimensional particles (bulk). The flat particles belong to the 2-dimensional substantially flat particles. Considering plasmon reflection, among the flat particles, preferred are flat triangular particles, flat hexagonal particles, and disc-like particles (i.e., flat triangular or hexagonal particles whose corners have been rounded).

Also, flat particles must be used for obtaining reflectivity. When 0-dimensional particles, 1-dimensional particles or 3-dimensional particles are planarily arranged, plasmon absorption is merely observed depending on each shape, so that satisfactory reflectivity cannot be obtained. Only when 2-dimensional particles are planarily arranged, one can obtain reflectivity which is a feature of the present invention.

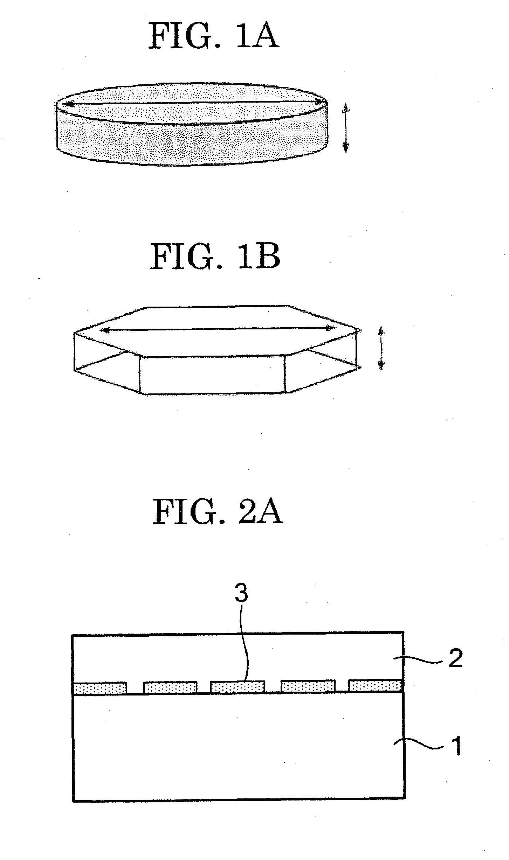

The flat metal particles are not particularly limited, so long as they are particles having two main planes (see Figs. 1A and 1B), and may be appropriately selected depending on the intended purpose. Examples thereof include substantially hexagonal particles, disc-like particles and substantially triangular particles. Among them, particularly preferred are substantially hexagonal particles and disc-like particles, since they have high transmittance with respect to visible light. Notably, in each of Figs. 1A and 1B, a horizontal two-sided arrow indicates a diameter and a vertical two-sided arrow indicates a thickness.

The disc-like particles are not particularly limited and may be appropriately selected depending on the intended purpose, so long as they have round corners when observed from a perpendicular direction of their main plane under a transmission electron microscope (TEM).

The substantially hexagonal particles are not particularly limited and may be appropriately selected depending on the intended purpose, so long as they have a substantially hexagonal shape when observed from a perpendicular direction of their main plane under a transmission electron microscope (TEM). For example, the corners of the hexagonal shape may be sharp or dull. From the viewpoint of reducing absorption of visible light, the corners thereof are preferably dull. The extent to which the corners are dull is not particularly limited and may be appropriately selected depending on the intended purpose.

The material for the flat metal particles is not particularly limited and may be appropriately selected depending on the intended purpose. Examples thereof include silver, gold, copper and alloys thereof. Among them, silver is particularly preferred, since it has high reflectivity with respect to heat rays (near infrared rays) and has no absorption of visible light.

The ratio of the substantially hexagonal particles or disc-like particles is preferably 60% by number or higher, more preferably 65% by number or higher, further preferably 70% by number or higher, relative to the total number of the metal particles. When the ratio of the above flat metal particles is lower than 60% by number, transmittance with respect to visible light rays may be decreased, which is disadvantageous.

### [Average particle diameter and particle size distribution]

The average particle diameter of the flat metal particles is 70 nm to 500 nm, more preferably 100 nm to 400 nm. When the average particle diameter thereof is less than 70 nm, the flat metal particles exhibit high absorbance to exhibit low reflectivity, resulting in that satisfactory heat ray reflectivity cannot be obtained in some cases. When the average particle diameter thereof exceeds 500 nm, haze (scattering) becomes large, resulting in that transparency of a substrate may be degraded.

Here, the average particle diameter refers to an average value of main planes' diameters (the maximum lengths) of 200 flat particles randomly selected from an image obtained through observation of particles under a TEM.

The metal particle-containing layer may contain two or more kinds of metal particles having different average particle diameters. In this case, the metal particles may have two or more peaks of average particle diameter; i.e., may have two average particle diameters.

In the heat ray-shielding material of the present invention, variation coefficient in a particle size distribution of the flat metal particles is preferably 30% or lower, more preferably 10% or lower. When the variation coefficient exceeds 30%, the wavelength region of heat rays reflected by the heat ray-shielding material may become broad, which is disadvantageous.

Here, the variation coefficient in the particle size distribution of the flat metal particles refers to a value (%) obtained as follows. Specifically, the particle diameters of the 200 flat metal particles, which are selected for determining the average particle diameter as described above, are plotted to obtain their distribution range. Then, the standard deviation of the particle size distribution is calculated and divided by the above-obtained average particle diameter of the main planes' diameters (the maximum lengths).

### [Aspect ratio]

The aspect ratio of the flat metal particles is 2 to 80, further preferably 4 to 60, since high reflectivity can be obtained from a longer wavelength region of the visible light range to the near infrared region. When the aspect ratio is less than 2, reflectivity may become low or haze may become large.

The aspect ratio refers to value L/d, where L denotes an average particle diameter of flat metal particles and d denotes an average particle thickness of flat metal particles. The average particle thickness corresponds to the interdistance of the main planes of flat metal particles as shown in, for example, Figs. 1A and 1B, and can be measured with an atomic force microscope (AFM).

The measurement method of the average particle thickness with the AFM is not particularly limited and may be appropriately selected depending on the intended purpose. For example, a particle dispersion liquid containing flat metal particles is dropped on a glass substrate, followed by drying, to thereby measure the thickness of each particle.

### [Synthesis method for flat metal particles]

The synthesis method for the flat metal particles is not particularly limited, so long as substantially hexagonal or disc-like particles can be synthesized, and may be appropriately selected depending on the intended purpose. Examples thereof include liquid phase methods such as chemical reduction methods, photochemical reduction methods and electrochemical reduction methods. Among these liquid phase methods, particularly preferred are chemical reduction methods and photochemical reduction methods from the viewpoint of controlling shape and size. Furthermore, after hexagonal or triangular flat metal particles have been synthesized, they may be subjected to, for example, an etching treatment using chemical species that dissolve silver (e.g., nitric acid, sodium sulfite and halogen ions such as Br⁻ and Cl⁻) or an aging treatment with heating so as to round the corners of the hexagonal or triangular flat metal particles, whereby substantially hexagonal or disc-like flat metal particles may be produced.

In an alternative synthesis method of the flat metal particles, seed crystals are fixed in advance on a surface of a transparent substrate (e.g., a film or a glass) and then are planarily grown to form metal particles (e.g., Ag).

In the heat ray-shielding material of the present invention, flat metal particles may be subjected to a further treatment in order for the flat metal particles to have desired properties. The further treatment is not particularly limited and may be appropriately selected depending on the intended purpose. Examples thereof include formation of a high-refractive-index shell layer and addition of various additives such as a dispersant and an anti-oxidant).

### -Formation of high-refractive-index shell layer-

The flat metal particles may be coated with a high-refractive-index material having high transparency with respect to visible light so as to further increase transparency with respect to visible light. Alternatively, a high-refractive-index material layer is provided at the upper or lower portion of the flat metal particle-containing layer in the present invention, preferably at the both upper and lower portions.

The high-refractive-index material is not particularly limited and may be appropriately selected depending on the intended purpose. Examples thereof include TiOₓ, BaTiO₃, ZnO, SnO₂, ZrO₂ and NbOₓ.

The coating method of the high-refractive-index material is not particularly limited and may be appropriately selected depending on the intended purpose. Examples thereof include a method in which a TiOₓ layer is formed on flat silver particles by hydrolyzing tetrabutoxytitanium as described in Langmuir, 2000, Vol. 16, pp. 2731-2735.

When it is difficult to directly form the high-refractive-index shell layer (metal oxide layer) on the flat metal particles, a SiO₂ or polymer shell layer may be formed on each particle in advance and the metal oxide layer may be formed on the thus-formed shell layer. When TiOₓ is used as a material for the high-refractive-index metal oxide layer, there is concern that TiOₓ degrades a matrix in which flat metal particles are dispersed, since TiOₓ exhibits photocatalytic activity Thus, depending on the intended purpose, a SiO₂ layer may be appropriately formed after formation of a TiOₓ on each flat metal particle.

### -Addition of various additives-

In the flat metal particle-containing composition of the present invention, an anti-oxidant (e.g., mercaptotetrazole or ascorbic acid) may be adsorbed onto the flat metal particles so as to prevent oxidation of the metal (e.g., silver) forming the flat metal particles. Also, an oxidation sacrificial layer (e.g., Ni) may be formed on the flat metal particles for preventing oxidation. Furthermore, the flat metal particles may be coated with a metal oxide film (e.g., SiO₂ film) for shielding oxygen.

Also, a dispersing agent may be used for imparting dispersibility to the flat metal particles. Examples of the dispersing agent include high-molecular-weight dispersing agents and low-molecular-weight dispersing agents containing N, S and/or P such as quaternary ammonium salts and amines.

### <Heterocyclic ring compound>

The heterocyclic ring compound must have a silver interaction potential EAg which is lower tan -1 mV, preferably -300 mV or higher but lower than -1 mV, more preferably -70 mV to -300 mV.

When the silver interaction potential EAg thereof is -1 mV or higher, light resistance cannot be obtained in some cases. When the silver interaction potential EAg thereof is lower than -300 mV, the obtained effects become low, which is disadvantageous.

Here, the silver interaction potential EAg can be measured by the following silver interaction potential method.

First, there is prepared a solution (50 mL) containing a heterocyclic ring compound at a concentration of 0.00100 M, potassium bicarbonate at a concentration of 0.0200 M and potassium carbonate at a concentration of 0.0267 M. The pH of the prepared solution is adjusted to 10.0 with 1 M nitric acid or sodium hydroxide. Then, 1 mL of 0.00500 M silver nitrate is added to the resultant solution at 20°C to 25°C with magnetic stirring. The potential of the solution 15 min after the addition of the silver nitrate is measured by an electrochemical method using a calomel electrode. The potential (mV) thusly measured is a silver interaction potential.

Here, the heterocyclic ring compound refers to a ring compound having one or more hetero atoms. The hetero atom refers to other atoms than a carbon atom and a hydrogen atom. No limitation is imposed on the number of hetero atoms the heterocyclic ring compound has. Notably, the hetero atom refers to an atom forming the heterocyclic ring of the heterocyclic ring compound, not refers to an atom which located outside the ring, which is separated from the ring via at least one unconjugated single bond, or which is part of the substituent of the ring.

Preferred examples of the hetero atom include a nitrogen atom, a sulfur atom, an oxygen atom, a selenium atom, a tellurium atom, a phosphorus atom, a silicon atom and a boron atom, with a nitrogen atom, a sulfur atom, an oxygen atom and a selenium atom being more preferred, with a nitrogen atom, a sulfur atom and an oxygen atom being further preferred, with a nitrogen atom and a sulfur atom being particularly preferred.

The number of the atoms forming the heterocyclic ring of the heterocyclic ring compound may be any number, but the heterocyclic ring is preferably a 3- to 8-membered ring, further preferably a 5- to 7-membered ring, particularly preferably a 5- or 6-membered ring.

The heterocyclic ring may be saturated or unsaturated. The heterocyclic ring is preferably has at least one unsaturated bond, further preferably has at least two unsaturated bonds. In other words, the heterocyclic ring may be any of an aromatic ring, a pseudoaromatic ring and a nonaromatic ring. The heterocyclic ring is preferably an aromatic heterocyclic ring or a pseudoaromatic heterocyclic ring, further preferably an aromatic heterocyclic ring.

Examples of the heterocyclic ring include a pyrrole ring, a thiophene ring, a furan ring, an imidazole ring, a pyrazole ring, a thiazole ring, an isothiazole ring, an oxazole ring, an isooxazole ring, a 1,2,4-triazole ring, a 1,2,3-triazole ring, a tetrazole ring, a 1,2,5-thiadiazole ring, a 1,3,4-thiadiazole ring, a 1,2,3,4-thiatriazole ring, a pyridine ring, a pyrazine ring, a pyrimidine ring, a pyridazine ring, an indolizine ring, benzocondensed compounds thereof, an indole ring, a benzofuran ring, a benzothiophen ring, an isobenzofuran ring, a benzimidazole ring, a benzotriazole ring, a benzothiadiazole ring, a benzoxadiazole ring, a quinolidine ring, a quinoline ring, a phthalazine ring, a quinoxaline ring, an isoquinoline ring, a carbazole ring, a phenanthridine ring, a phenanthroline ring, an acridine ring, a purine ring, a 4,4'-bipyridine ring, a 1,2-bis(4-pyridyl)ethan ring, a 4,4'-trimethylenedipyridine ring, partially or totally saturated compounds thereof, a pyrrolidine ring, a pyrroline ring and an imidazoline ring.

Some typical heterocyclic rings are as follows.

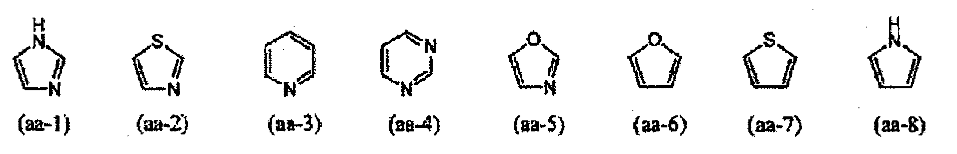

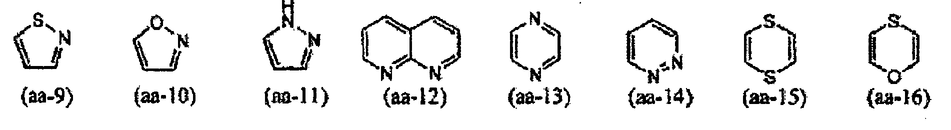

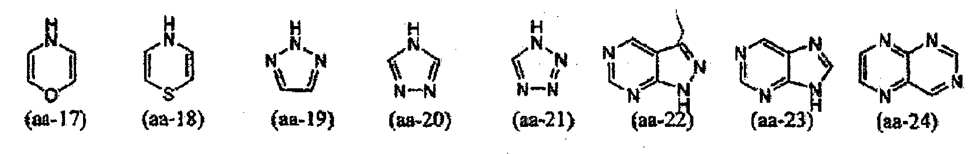

Some exemplary heterocyclic rings fused with a benzene ring are as follows.

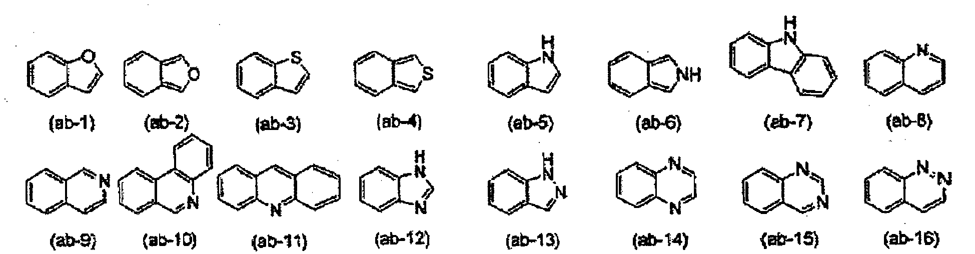

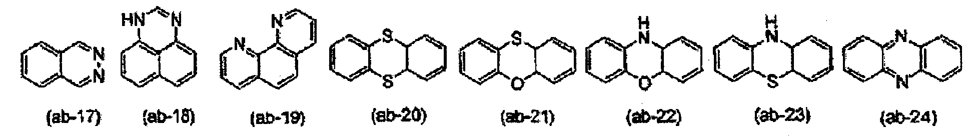

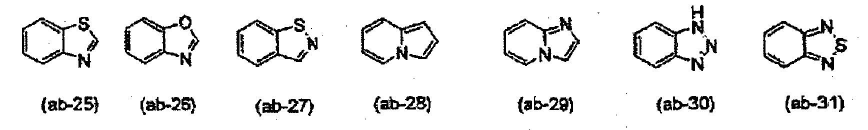

Some exemplary heterocyclic rings partially or totally saturated are as follows.

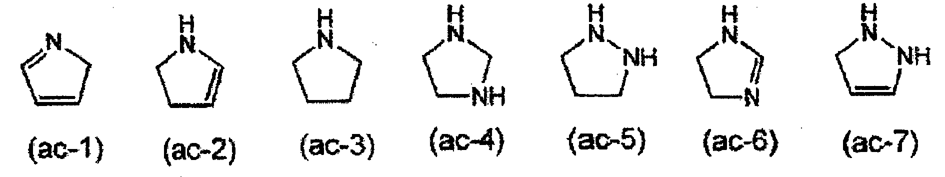

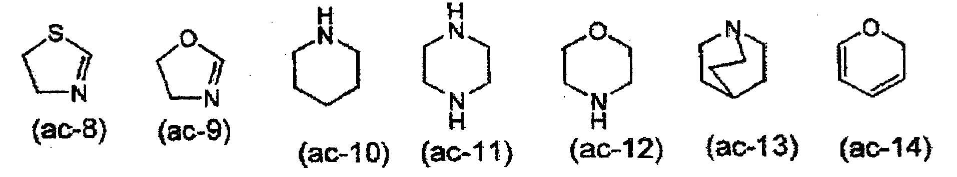

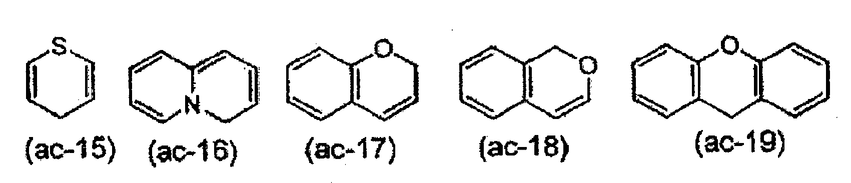

In addition, the following heterocyclic rings can be used.

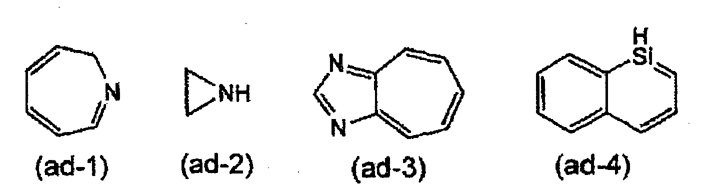

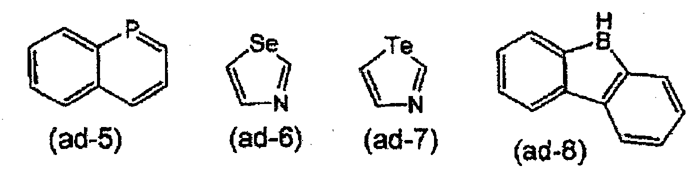

These heterocyclic rings may be substituted or fused with any substituent, and examples of the substituent include the below-described W. Also, a tertiary nitrogen atom contained in the heterocyclic ring may have a further substituent to be a quaternary nitrogen atom. Notably, the heterocyclic rings are chemically equivalent to their tautomers, if any.

Among the above heterocyclic rings, those indicated by (aa-1), (aa-3), (aa-19), (aa-20), (ab-12) and (ab-25) are particularly preferred.

When a specific part in the heterocyclic ring compound is referred to as a "group," this part may be unsubstituted or substituted by one or more substituents whose maximum number depends on the part. For example, the "alkyl group" refers to a substituted or unsubstituted alkyl group. The substituent usable in the heterocyclic ring compound may be any substituent which may have a substituent.

When such a substituent is denoted by W, the substituent W is any substituent without any limitation. Examples thereof include a halogen atom, an alkyl group (including a cycloalkyl group, a bicycloalkyl group and a tricycloalkyl group), an alkenyl group (including a cycloalkenyl group and a bicycloalkenyl group), an alkynyl group, an aryl group, a heterocyclic ring group (or a heterocyclic group), a cyano group, a hydroxyl group, a nitro group, a carboxyl group, an alkoxy group, an aryloxy group, a silyloxy group, a heterocyclic oxy group, an acyloxyl group, a carbamoyloxy group, an alkoxycarbonyloxy group, an aryloxycarbonyloxy group, an amino group (including an alkylamino group, an arylamino group and a heterocyclic amino group), an ammonio group, an acylamino group, an aminocarbonylamino group, an alkoxycarbonylamino group, an aryloxycarbonylamino group, a sulfamoylamino group, an alkyl or arylsulfonylamino group, a mercapto group, an alkylthio group, an arylthio group, a heterocyclicthio group, a sulfamoyl group, a sulfo group, an alkyl or arylsulfinyl group, an alkyl or arylsulfonyl group, an acyl group, an aryloxycarbonyl group, an alkoxycarbonyl group, a carbamoyl group, an aryl or heterocyclicazo group, an imide group, a phosphino group, a phosphinyl group, a phosphinyloxy group, a phosphinylamino group, a phosphono group, a silyl group, a hydrazino group, an ureido group, a boronic acid group (-B(OH)₂), a phosphato group (-OPO(OH)₂), sulphato group (-OSO₃H) and other known substituents.

More specifically, the substituent W is a halogen atom such as a fluorine atom, a chlorine atom, a bromine atom or an iodine atom; or a linear, branched or cyclic, substituted or unsubstituted alkyl group. Such an alkyl group includes alkyl groups (preferably C1-C30 alkyl groups such as methyl, ethyl, n-propyl, isopropyl, t-butyl, n-octyl, eicosyl, 2-chloroethyl, 2-cyanoethyl and 2-ethylhexyl), cycloalkyl groups (preferably C3-C30 substituted or unsubstituted cycloalkyl groups such as cyclohexyl, cyclopentyl and 4-n-dodecylcyclohexyl) and bicycloalkyl groups (preferably C5-C30 substituted or unsubstituted bicycloalkyl groups; i.e., monovalent groups obtained by removing one hydrogen atom from C5-C30 bicycloalkanes, such as bicyclo[1,2,2]heptan-2-yl and bicyclo[2,2,2]octan-3-yl); and also includes multiple ring structures such as tricyclo structures. The alkyl group of the below-described substituents (for example, the alkyl group of an alkylthio group) is the above-described alkyl group but further includes an alkenyl group and an alkynyl group, herein. The alkenyl group is linear, branched or cyclic, substituted or unsubstituted alkenyl groups. The substituent W includes alkenyl groups (preferably C2-C30 substituted or unsubstituted alkenyl groups such as vinyl, allyl, prenyl, geranyl and oleyl), cycloalkenyl groups (preferably C3-C30 substituted or unsubstituted cycloalkenyl groups; i.e., monovalent groups obtained by removing one hydrogen atom from C3-C30 cycloalkenes, such as 2-cyclopenten-1-yl and 2-cyclohexen-1-yl), bicycloalkenyl groups (substituted or unsubstituted bicycloalkenyl groups, preferably C5-C30 substituted or unsubstituted bicycloalkenyl groups; i.e., monovalent groups obtained by removing one hydrogen atom from bicycloalkenes having one double bond, such as bicyclo[2,2,1]hept-2-en-1-yl and bicyclo[2,2,2]oct-2-en-4-yl); alkynyl groups (preferably, C2-C30 substituted or unsubstituted alkynyl groups such as ethynyl, propargyl and trimethylsilylethynyl), aryl groups (preferably C6-C30 substituted or unsubstituted aryl groups such as phenyl, p-tolyl, naphthyl, m-chlorophenyl and o-hexadecanoylaminophenyl), heterocyclic ring groups (preferably monovalent groups which may be fused with a benzene ring, etc. and which are obtained by removing one hydrogen atom from 5- or 6-membered substituted or unsubstituted, aromatic or nonarmoatic heterocyclic ring compound, further preferably 5- or 6-membered C3-C30 aromatic heterocyclic ring groups such as 2-furyl, 2-thienyl, 2-pyrimidinyl and 2-benzothiazolyl (note that the heterocyclic ring groups may be cationic heterocyclic ring groups such as 1-methyl-2-pyridinio and 1-methyl-2-quinolynio)), a cyano group, a hydroxyl group, a nitro group, a carboxyl group, an alkoxy group (preferably C1-C30 substituted or unsubstituted alkoxy groups such as methoxy, ethoxy, isopropoxy, t-butoxy, n-octyloxy and 2-methoxyethoxy), aryloxy groups (preferably C6-C30 substituted or unsubstituted aryloxy groups such as phenoxy, 2-methylphenoxy, 4-t-butylphenoxy, 3-nitrophenoxy and 2-tetradecanoylaminophenoxy), silyloxy groups (preferably C3-C20 silyloxy groups such as trimethylsilyloxy and t-butyldimethylsilyloxy), heterocyclic oxy groups (preferably C2-C30 substituted or unsubstituted heterocyclic oxy groups such as 1-phenyltetrazole-5-oxy and 2-tetrahydropyranyloxy), acyloxyl groups (preferably a formyloxy group, C2-C30 substituted or unsubstituted alkylcarbonyloxy groups, C7-C30 substituted or unsubstituted arylcarbonyloxy groups such as formyloxy, acetyloxy, pivaloyloxy, stealoyloxy, benzoyloxy and p-methoxyphenylcarbonyloxy), carbamoyloxy groups (preferably C1-C30 substituted or unsubstituted carbamoyloxy groups such as N,N-dimethylcarbamoyloxy, N,N-diethylcarbamoyloxy, morpholinocarbonyloxy, N,N-di-n-octylaminocarbonyloxy and N-n-octylcarbamoyloxy), alkoxycarbonyloxy groups (preferably C2-C30 substituted or unsubstituted alkoxycarbonyloxy groups such as methoxycarbonyloxy, ethoxycarbonyloxy, t-butoxycarbonyloxy and n-octylcarbonyloxy), aryloxycarbonyloxy groups (preferably C7-C30 substituted or unsubstituted aryloxycarbonyloxy groups such as phenoxycarbonyloxy, p-methoxyphenaxycarbonyloxy and p-n-hexadecyloxyphenoxycarbonyloxy), amino groups (preferably an amino group, C1-C30 substituted or unsubstituted alkylamino groups, C6-C30 substituted or unsubstituted arylamino groups, heterocyclic amino groups, such as amino, methylamino, dimethylamino, anilino, N-methyl-anilino, diphenylamino and 2-pyridylamino), ammonio groups (preferably an ammonio group; ammonio groups substituted with C1-C30 substituted or unsubstituted alkyls, aryls or heterocyclic ring, such as trimethylammonio, triethylammonio and diphenylmethylammonio), acylamino groups (preferably a formylamino group, C1-C30 substituted or unsubstituted alkylcarbonylamino groups and C6-C30 substituted or unsubstituted arylcarbonylamino groups, such as formylamino, acetylamino, pivaloylamino, lauroylamino, benzoylamino and 3,4,5-tri-n-octyloxyphenylcarbonylamino), aminocarbonylamino groups (preferably C1-C30 substituted or unsubstituted aminocarbonylaminos such as carbamoylamino, N,N-dimethylaminocarbonylamino, N,N-diethylaminocarbonylamino and morpholinocarbonylamino), alkoxycarbonylamino groups (preferably C2-C30 substituted or unsubstituted alkoxycarbonylamino groups such as methoxycarbonylamino, ethoxycarbonylamino, t-butoxycarbonylamino, n-octadecyloxycarbonylamino and N-methyl-methoxycarbonylamino), aryloxycarbonylamino groups (preferably C7-C30 substituted or unsubstituted aryloxycarbonylamino groups such as phenoxycarbonylamino, p-chlorophenoxycarbonylamino and m-n-octyloxyphenoxycarbonylamino), sulfamoylamino groups (preferably C0-C30 substituted or unsubstituted sulfamoylamino groups such as sulfamoylamino, N,N-dimethylaminosulfonylamino and N-n-octylaminosulfonylamino), alkyl or arylsulfonylamino groups (preferably C1-C30 substituted or unsubstituted alkylsulfonylamino and C6-C30 substituted or unsubstituted arylsulfonylamino, such as methylsulfonylamino, butylsulfonylamino, phenylsulfonylamino, 2,3,5-trichlorophenylsulfonylamino and p-methylphenylsulfanylamino), a mercapto group, alkylthio groups (preferably C1-C30 substituted or unsubstituted alkylthio groups such as methylthio, ethylthio and n-hexadecylthio), arylthio groups (preferably C6-C30 substituted or unsubstituted arylthios such as phenylthio, p-chlorophenylthio and m-methoxyphenylthio), heterocyclicthio groups (preferably C2-C30 substituted or unsubstituted heterocyclicthio groups such as 2-benzothiazolylthio and 1-phenyltetrazol-5-ylthio), sulfamoyl groups (preferably C0-C30 substituted or unsubstituted sulfamoyl groups such as N-ethylsulfamoyl, N-(3-dodecyloxypropyl)sulfamoyl, N,N-dimethylsulfamoyl, N-acetylsulfamoyl, N-benzoylsulfamoyl, N-(N'-phenylcarbamoyl)sulfamoyl), a sulfo group, alkyl or arylsulfinyl groups (preferably C1-C30 substituted or unsubstituted alkylsulfinyl groups and C6-C30 substituted or unsubstituted arylsulfinyl groups such as methylsulfinyl, ethylsulfinyl, phenylsulfinyl and p-methylphenylsulfinyl), alkyl or arylsulfonyl groups (preferably C1-C30 substituted or unsubstituted alkylsulfonyl groups and C6-C30 substituted or unsubstituted arylsulfonyl groups such as methylsulfonyl, ethylsulfonyl, phenylsulfonyl and p-methylphenylsulfonyl), acyl groups (preferably a formyl group, C2-C30 substituted or unsubstituted alkylcarbonyl groups, C7-C30 substituted or unsubstituted arylcarbonyl groups, C4-C30 heterocyclic carbonyl groups in which substituted or unsubstituted heterocyclic rings are bonded to a carbonyl, such as acetyl, pivaloyl, 2-chloroacetyl, stearoly, benzoyl, p-n-octyloxyphenylearbonyl, 2-pyridylcarbonyl and 2-furylcarbonyl), aryloxycarbonyl groups (preferably C7-C30 substituted or unsubstituted aryloxycarbonyl groups such as phenoxycarbonyl, o-chlorophenoxycarbonyl, m-nitrophenoxycarbonyl and p-t-butylphenoxycarbonyl), alkoxycarbonyl groups (preferably C2-C30 substituted or unsubstituted alkoxycarbonyl groups such as methoxycarbonyl, ethoxycarbonyl, t-butoxycarbonyl and n-octadecyloxycarbonyl), carbamoyl groups (preferably C1-C30 substituted or unsubstituted carbamoyls such as carbamoyl, N-methylcarbamoyl, N,N-dimethylcarbamoyl, N,N-di-n-octylcarbamoyl and N-(methylsulfonyl)carbamoyl), aryl or heterocyclicazo groups (preferably C6-C30 substituted or unsubstituted arylazo groups and C3-C30 substituted or unsubstituted heterocyclicazo groups, such as phenylazo, p-chlorophenylazo and 5-ethylthio-1,3,4-thiadiazol-2-ylazo), imide groups (preferably N-succinimide and N-phthalimide), phosphino groups (preferably C2-C30 substituted or unsubstituted phosphino group such as dimethylphosphino, diphenylphosphino and methylphenoxyphosphino), phosphinyl groups (preferably C2-C30 substituted or unsubstituted phosphinyl groups such as phosphinyl, dioctyloxyphosphinyl and diethaxyphosphinyl), phosphinyloxy groups (preferably C2-C30 substituted or unsubstituted phosphinyloxy groups such as diphenoxyphosphinyloxy and dioctyloxyphosphinyloxy), phosphinylamino groups (preferably C2-C30 substituted or unsubstituted phosphinylamino groups such as dimethoxyphosphinylamino and dimethylaminophosphinylamino), a phosphono group, silyl groups (preferably C3-C30 substituted or unsubstituted silyl groups such as trimethylsily, t-butyldimethylsilyl and phenyldimethylsilyl), hydrazino groups (preferably C0-C30 substituted or unsubstituted hydrazino groups such as trimethylhydrazino) and ureido groups (preferably C0-C30 substituted or unsubstituted ureido groups such as N,N-dimethylureido).

Also, two substituents W may be bonded to form a ring, which is an aromatic or nonaromatic hydrocarbon ring or heterocyclic ring. The formed ring may be further combined with other rings to form a polycondensed ring. Examples thereof include a benzene ring, a naphthalene ring, an anthracene ring, a phenanthrene ring, a fluorene ring, a triphenylene ring, a naphthacene ring, a biphenyl ring, a pyrrol ring, a furan ring, a thiophene ring, an imidazole ring, an oxazole ring, a thiazole ring, a pyridine ring, a pyrazine ring, a pyrimidine ring, a pyridazine ring, an indolizine ring, an indole ring, a benzofuran ring, a benzothiophene ring, an isobenzofuran ring, a quinolizine ring, a quinoline ring, a phthalazine ring, a naphthyridine ring, a quinoxaline ring, a quinoxazoline ring, an isoquinoline ring, a carbazole ring, a phenanthridine ring, an acridine ring, a phenanthroline ring, a thianthrene ring, a chromene ring, a xanthene ring, a phenoxathiin ring, a phenothiazine ring and a phenazine ring.

The hydrogen atom of the substituents W may be further substituted with the above substituent. Examples of such substituents include a -CONHSO₂- group (a sulfonylcarbamoyl group or a carbonylsulfamoyl group), a -CONHCO- group (a carbonylcarbamoyl group) and a -SO₂NHSO₂- group (a sulfonylsulfamoyl group).

Specific examples thereof include alkylcarbonylaminosulfonyl groups (e.g., acetylaminosulfonyl), arylcarbonylaminosulfonyl groups (e.g., a benzoylaminosulfonyl group), alkylsulfonylaminocarbonyl groups (e.g., methylsulfonylaminocarbonyl) and arylsulfonylaminocarbonyl groups (e.g., p-methylphenylsulfonylaminocarbonyl).

Next will be given particularly preferable examples of the heterocyclic ring compounds described above in detail. But, compounds usable in the present invention should not be construed as being limited thereto.

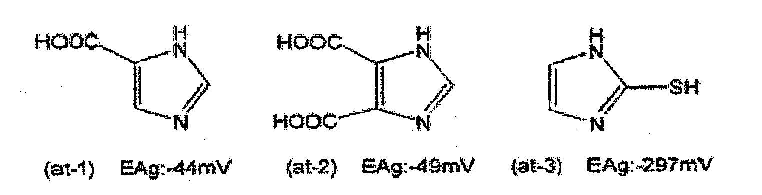

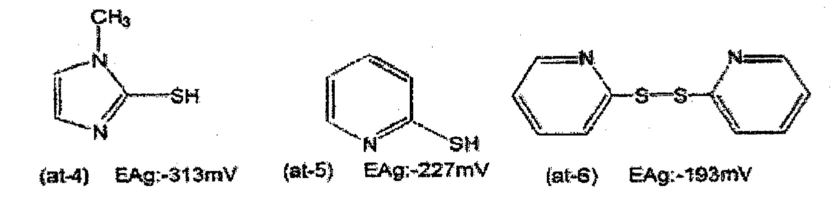

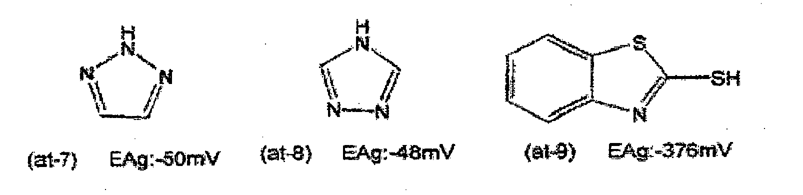

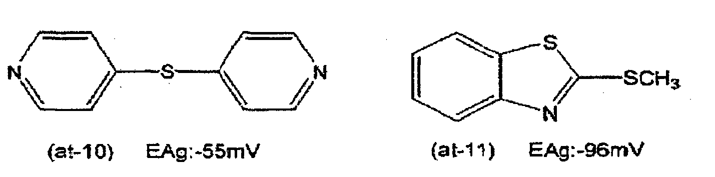

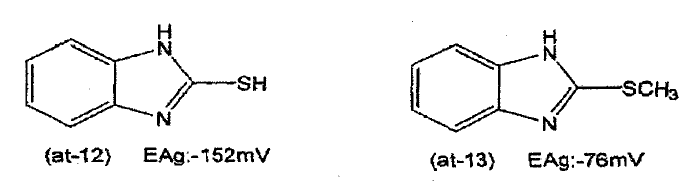

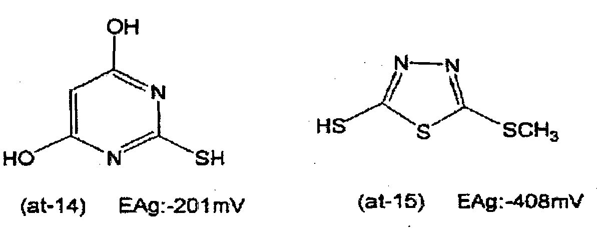

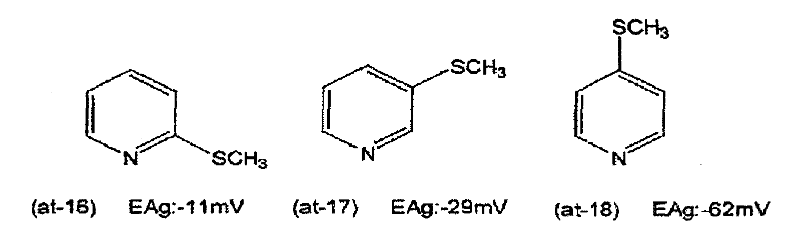

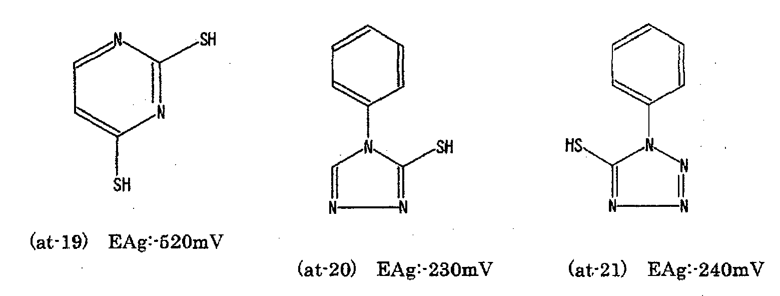

Among them, the compounds indicated by at-20 and at-21 are particularly preferred since satisfactory effects can be obtained.

The method for incorporating the heterocyclic ring compound into the flat metal particle-containing composition is preferably the following methods, but employable methods should not be construed as being limited thereto.

### (1) Addition of heterocyclic ring compound solution to flat metal particle-containing composition

A solution of the heterocyclic ring compound may be added to the flat metal particle-containing composition before coating of the flat metal particle-containing composition. The mixing period after addition of the heterocyclic ring compound solution is preferably 1 min to 60 min, more preferably 2 min to 30 min. The temperature of the mixture (dispersion liquid) during mixing is preferably 20°C to 80°C, more preferably 30°C to 60°C.

### (2) Simultaneous coating of flat metal particle-containing composition and heterocyclic ring compound solution; simultaneous coating of flat metal particle-containing composition and heterocyclic ring compound as separate layers, or coating of heterocyclic ring compound solution after coating of flat metal particle-containing composition

The heterocyclic ring compound is dissolved in a solvent such as water or methanol. Then, coating of the resultant solution may be performed simultaneously with coating of the flat metal particle-containing composition. In this case, the flat metal particle-containing composition and the heterocyclic ring compound solution may be mixed together immediately before coating, or may be coated as separate layers. Alternatively, the heterocyclic ring compound solution may be coated after coating of the flat metal particle-containing composition.

### (3) Immersion of product coated with flat metal particle-containing composition in heterocyclic ring compound solution

Also, a sample obtained through coating of the flat metal particle-containing composition may be immersed in the heterocyclic ring compound solution In this case, the immersion time is preferably 1 min to 60 min, further preferably 2 min to 30 min. The temperature of the solution during immersion is preferably 10°C to 60°C, further preferably 20°C to 50°C. The concentration of the heterocyclic ring compound solution is preferably 0.1% by mass to 10% by mass, more preferably 0.5% by mass to 5% by mass.

The amount of the heterocyclic ring compound added is preferably 1 × 10⁻⁵ mol to 1 mol, further preferably 5 × 10⁻⁵ mol to 1 × 10⁻¹ mol, particularly preferably 1 × 10⁻⁴ to 5 × 10⁻² mol, per 1 mol of the metal contained in the flat metal particle-containing composition.

The flat metal particle-containing composition of the present invention may appropriately contain various additives such as a surfactant, a polymerizable compound, an antioxidant, a sulfurization inhibitor, a corrosion inhibitor, a viscosity adjuster and an antiseptic agent.

In the flat metal particle-containing composition of the present invention, the flat metal particles exist more stably and reduction of plasmon reflection due to light can be prevented. Thus, the flat metal particle-containing composition can be suitably used in, for example, a heat ray reflection film, an infrared ray reflection film, a visible light reflection film, a heat ray absorption film, an infrared ray absorption film and a selective reflection film. Furthermore, the flat metal particle-containing composition has high selectivity for reflection wavelength or region, has excellent transmittance with respect to visible light and radio wave and has excellent light resistance, and thus, can be suitably used as the below-described heat ray-shielding material.

### (Heat ray-shielding material)

A heat ray-shielding material of the present invention contains the above-described flat metal particle-containing composition of the present invention; and, if necessary, may further contains other members.

The heat ray-shielding material includes a substrate and a flat metal particle-containing layer formed of the flat metal particle-containing composition of the present invention; and, if necessary, further includes other members.

### <Flat metal particle-containing layer>

The flat metal particle-containing layer is not particularly limited and may be appropriately selected depending on the intended purpose, so long as it is formed of the flat metal particle-containing composition of the present invention and is provided on the substrate.

The flat metal particle-containing layer may be formed by coating the substrate with the flat metal particle-containing composition of the present invention. Examples of the coating method include spin coating, dip coating, extrusion coating, bar coating and die coating.

### <Substrate>

The substrate is not particularly limited, so long as it is optically transparent, and may be appropriately selected depending on the intended purpose. For example, the substrate is a substrate having a visible light transmittance of 70% or higher, preferably 80% or higher, or a substrate having a high transmittance with respect to lights of the near-infrared region.

The material for the substrate is not particularly limited and may be appropriately selected depending on the intended purpose. Examples thereof include glass materials (e.g., a white glass plate and a blue glass plate), polyethylene terephthalate (PET) and triacetylcellulose (TAC).

### <Other members>

### «Protective layer»

The heat ray-shielding material of the present invention preferably contains a protective layer for improving the adhesion to the substrate and mechanically protecting the resultant product.

The protective layer is not particularly limited and may be appropriately selected depending on the intended purpose. The protective layer contains, for example, a binder, a surfactant and a viscosity adjuster; and, if necessary, further includes other ingredients.

### -Binder-

The binder is not particularly limited and may be appropriately selected depending on the intended purpose. The binder preferably has higher transparency with respect to visible light and solar radiation. Examples thereof include acrylic resins, polyvinylbutyrals and polyvinylalcohols. Notably, when the binder absorbs heat rays, the reflection effects of the flat metal particles are disadvantageously weakened. Thus, when an intermediate layer is formed between the heat ray source and the flat metal particles, preferably, a material having no absorption of light having a wavelength of 780 nm to 1,500 nm is selected or the thickness of the protective layer is made small.

### [Plane orientation]

In one embodiment of the heat ray-shielding material of the present invention, the flat metal particles are arranged so that their mane planes are plane-oriented at a predetermined angle with respect to a surface of the substrate.

The manner in which the flat metal particles are arranged is not particularly limited and may be appropriately selected depending on the intended purpose. Preferably, the flat metal particles are arranged in substantially parallel with the substrate surface, from the viewpoint of increasing heat ray reflectivity.

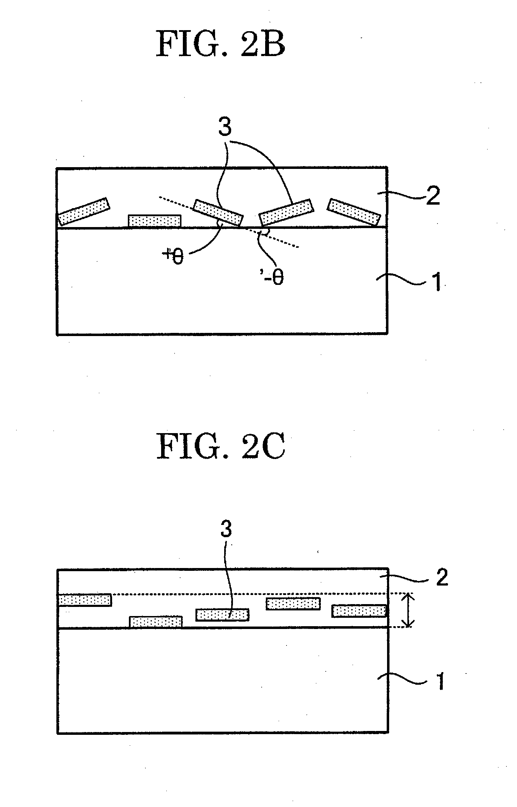

The manner in which the flat metal particles are plane-oriented is not particularly limited and may be appropriately selected depending on the intended purpose, so long as main planes of the flat metal particles are in substantially parallel with the substrate surface within a predetermined angle range. The angle formed between the substrate surface and the main planes of the flat metal particles is preferably 0° to ±30°, more preferably 0° to ±20°, further preferably 0° to ±5°. Here, Figs. 2A to 2C are each a schematic cross-sectional view of the metal particle-containing layer containing the flat metal particles in a heat ray-shielding material of the present invention. Fig. 2A illustrates flat metal particles 3 existing in a metal particle-containing layer 2 in an ideal state. Fig. 2B explains angles (±θ) formed between a surface of a substrate 1 and planes of flat particles 3. Fig. 2C illustrates a region where flat metal particles exist in a depth direction of a metal particle-containing layer 2 of the heat ray-shielding material. Notably, a vertical two-sided arrow in Fig. 2C indicates a region f(λ) where the particles exist.

The above-described predetermined angle range of the plane orientation corresponds to angles (±θ) formed between the surface of the substrate 1 and the main planes of the flat metal particles 3 or extended lines of the main planes, as shown in Fig. 2B. That is, the term "plane orientation" refers to a state where the angles (±θ) shown in Fig. 2B are small when the cross section of the heat ray-shielding material is observed. In particular, Fig. 2A illustrates a state where the surface of the substrate 1 is in contact with the main planes of the flat metal particles 3; i.e., the angles θ are 0°. When the main planes of the flat metal particles 3 are plane-oriented on the surface of the substrate 1 at angles exceeding ±30°; i.e., when the angles θ shown in Fig. 2B exceed ±30°, the heat ray-shielding material has degraded reflectance to light of a predetermined wavelength (for examples, from a longer wavelength region of the visible light range to the near infrared region) and exhibits large haze, which is not preferred.

### [Evaluation of plane orientation]

The method for evaluating whether the main planes of the flat metal particles are plane-oriented on the surface of the substrate is not particularly limited and may be appropriately selected depending on the intended purpose. Examples thereof include a method including preparing appropriate cross-sectional pieces and observing the substrate and the flat metal particles in the pieces. In one specific method, the heat ray-shielding material is cut with a microtome or a focused ion beam (FIB) to prepare cross-sectional samples or cross-sectional pieces of the heat ray-shielding material; the thus-prepared samples or pieces are observed with various microscopes (e.g., a field emission scanning electron microscope (FE-SEM)); and the obtained images are used for evaluation.

When the binder covering the flat metal particles of the heat ray-shielding material is swelled with water, the cross-sectional samples or cross-sectional pieces may be prepared by freezing the heat ray-shielding material in liquid nitrogen and by cutting the resultant sample with a diamond cutter equipped with a microtome. In contrast, when the binder covering the flat metal particles of the heat ray-shielding material is not swelled with water, the cross-sectional samples or cross-sectional pieces may be prepared directly.

The method for observing the above-prepared cross-sectional samples or cross-sectional pieces is not particularly limited and may be appropriately selected depending on the intended purpose, so long as the method can determine whether or not the main planes of the flat metal particles are plane-oriented on the surface of the substrate in the samples. The observation can be performed with, for example, a FE-SEM, a TEM and an optical microscope. The cross-sectional samples may be observed with a FE-SEM and the cross-sectional pieces may be observed with a TEM. When the FE-SEM is used for evaluation, the FE-SEM preferably has a spatial resolution with which the shapes of the flat metal particles and the angles (±θ shown in Fig. 2B) can be clearly observed.

### [Region where flat metal particles exist]

In the heat ray-shielding material of the present invention, as shown in Fig. 2C, the metal particle-containing layer 2 preferably exists within a range of (λ/n)/4 in a depth direction from the horizontal surface of the heat ray-shielding material, where λ, denotes a plasmon resonance wavelength of the metal forming the flat metal particles 3 contained in the metal particle-containing layer 2 and n denotes a refractive index of the medium of the metal particle-containing layer 2. When the metal particle-containing layer 2 exists in a broader range than this range, the effect of strengthening the phases becomes small at the interfaces between air and the front and rear surfaces of the heat ray-shielding material, potentially leading to a decrease in visible light transmittance and the maximum reflectance to heat rays.

The plasmon resonance wavelength λ of the metal forming the flat metal particles contained in the metal particle-containing layer is not particularly limited and may be appropriately selected depending on the intended purpose. The plasmon resonance wavelength λ is preferably 400 nm to 2,500 nm from the viewpoint of exhibiting heat ray reflectivity. More preferably, the plasmon resonance wavelength λ is 700 nm to 2,500 nm from the viewpoint of reducing haze (scattering) of visible light.

The medium of the metal particle-containing layer is not particularly limited and may be appropriately selected depending on the intended purpose. Examples thereof include polyvinylacetal resins, polyvinylalcohol resins, polyvinylbutyral resins, polyacrylate resins, polymethyl methacrylate resins, polycarbonate resins, polyvinyl chloride resins, saturated polyester resins, polyurethane resins, polymers such as naturally occurring polymers (e.g., gelatin and cellulose) and inorganic compounds (e.g. silicon dioxide and aluminum oxide).

The refractive index n of the medium is preferably 1.4 to 1.7.

### [Area ratio of flat metal particles]

When A and B denote respectively a projected area of the substrate and the total value of projected areas of the flat metal particles when the heat ray-shielding material is viewed from a perpendicular direction, the area ratio of (B/A) × 100 is preferably 15% or higher, more preferably 20% or higher. When the area ratio is lower than 15%, the maximum reflectivity to heat rays is decreased, resulting in that satisfactory heat-shielding effects cannot be obtained in some cases.

The area ratio can be measured, for example, as follows. Specifically, the heat ray-shielding material is observed under a SEM or an AFM (atomic force microscope) and the resultant image is subjected to image processing.

### [Average interparticle distance between flat metal particles]

In the metal particle-containing layer, the average interparticle distance between the flat metal particles neighboring in a horizontal direction is preferably equal to or larger than 1/10 the average particle diameter of the flat metal particles from the viewpoint of obtaining desired visible light transmittance and the maximum reflectance to heat rays.

When the average interparticle distance of the flat metal particles in a horizontal direction is lower than 1/10 the average particle diameter of the flat metal particles, the maximum reflectance to heat rays is disadvantageously decreased. Also, the average interparticle distance in a horizontal direction is preferably ununiform (random) from the viewpoint of obtaining visible light transmittance. When the average interparticle distance is not random; i.e., uniform, the metal particle-containing layer absorbs visible light, resulting in that its transmittance may be decreased.

Here, the average interparticle distance of the flat metal particles in a horizontal direction refers to an average value of interparticle distances between two neighboring particles. Also, the description "the average interparticle distance is random" means that there is no significant local maximum point except for the origin in a two-dimensional autocorrelation of brightness values when binarizing a SEM image containing 100 or more of flat metal particles.

### [Interdistance between neighboring metal particle-containing layers]

In the heat ray-shielding material of the present invention, the flat metal particles are arranged in the form of the metal particle-containing layer containing the flat metal particles, as shown in Figs. 2A to 2C.

The metal particle-containing layer may be a single layer as shown in Figs. 2A to 2C. Alternatively, two or more of the metal particle-containing layer may be provided. Provision of two or more of the metal particle-containing layer attains desired shielding of light of a desired wavelength region.

The production method for the heat ray-shielding material of the present invention is not particularly limited and may be appropriately selected depending on the intended purpose. In one employable method, a substrate is coated with a dispersion liquid containing the flat metal particles using, for example, a dip coater, a die coater, a slit coater, a bar coater or a gravure coater. In another employable method, the flat metal particles are plane-oriented by, for example, an LB film method, a self-organizing method and a spray method.

Also, a method utilizing electrostatic interactions may be applied to plane orientation in order to increase adsorbability or plane orientability of the flat metal particles on the substrate surface. Specifically, when the surfaces of the flat metal particles are negatively charged (for example, when the flat metal particles are dispersed in a negatively chargeable medium such as citric acid), the substrate surface is positively charged (for example, the substrate surface is modified with an amino group, etc.) to electrostatically enhance plane orientability. Also, when the surfaces of the flat metal particles are hydrophilic, the substrate surface may be provided with a sea-island structure having hydrophilic and hydrophobic regions using, for example, a block copolymer or a micro contact stamp, to thereby control the plane orientability and the interparticle distance of the flat metal particles utilizing hydrophilic-hydrophobic interactions.

Notably, the coated flat metal particles are allowed to pass through pressure rollers (e.g., calender rollers or rami rollers) to promote their plane orientation.

The solar reflectance of the heat ray-shielding material of the present invention is preferably maximal in the range of 600 nm to 2,000 nm (preferably 700 nm to 1,600 nm) from the viewpoint of increasing efficiency of heat ray reflection.

The heat ray-shielding material of the present invention preferably has a visible light transmittance of 60% or higher. When the visible light transmittance thereof is lower than 60%, one may difficult to see through automotive glass or building glass using the heat ray-shielding material.

The heat ray-shielding material of the present invention preferably has a haze of 20% or lower. When the haze thereof exceeds 20%, one may difficult to see through automotive glass or building glass using the heat ray-shielding material, which is not preferred in terms of safety.

The usage form of the heat ray-shielding material of the present invention is not particularly limited and may be appropriately selected depending on the intended purpose. Examples thereof include vehicles' glass or films, building glass or films and agricultural films. Among them, the heat ray-shielding material is preferably used as vehicles' glass or films and building glass or films in terms of energy saving.

Notably, in the present invention, heat rays (near infrared rays) refer to near infrared rays (780 nm to 2,500 nm) accounting for about 50% of sunlight.

The production method for the glass is not particularly limited and may be appropriately selected depending on the intended purpose. In one employable method, the heat ray-shielding material produced in the above-described manner is provided with an adhesive layer, and the resultant laminate is attached onto vehicle's glass (e.g., automotive glass) or building glass or is inserted together with a PVB or EVA intermediate film used in laminated glass. Alternatively, only particle/binder layer may be transferred onto a PVB or EVA intermediate film; i.e., the substrate may be peeled off in use.

### Examples

The present invention will next be described by way of Examples, which should not be construed as limiting the present invention thereto.

The silver interaction potential EAg of the heterocyclic ring compounds used in Examples and Comparative Examples was measured as follows.

### <Silver interaction potential EAg of a heterocyclic ring compound>

The silver interaction potential EAg can be measured by the following silver interaction potential method.

First, there is prepared a solution (50 mL) containing a heterocyclic ring compound at a concentration of 0.00100 M, potassium bicarbonate at a concentration of 0.0200 M and potassium carbonate at a concentration of 0.0267 M. The pH of the prepared solution is adjusted to 10.0 with 1 M nitric acid or sodium hydroxide. Then, 1 mL of 0.00500 M silver nitrate was added to the resultant solution at 20°C to 25°C with magnetic stirring. The potential of the solution 15 min after the addition of the silver nitrate was measured by an electrochemical method using a calomel electrode. The potential (mV) thusly measured is a silver interaction potential.

### (Production Example 1)

### -Synthesis of flat silver particles-

A 0.5 g/L aqueous polystyrenesulfonic acid solution (2.5 mL) was added to a 2.5 mM aqueous sodium citrate solution (50 mL), followed by heating to 35°C. Then, a 10 mM sodium borohydride solution (3 mL) was added to the resultant solution. Next, a 0.5 mM aqueous silver nitrate solution (50 mL) was added thereto at 20 mL/min under stirring. This solution was stirred for 30 min to prepare a seed particle solution (the synthesis step of flat nuclear particles).

Next, ion-exchanged water (87.1 mL) was added to a 2.5 mM aqueous sodium citrate solution (132.7 mL), followed by heating to 35°C. Subsequently, a 10 mM aqueous ascorbic acid solution (2 mL) was added to the resultant solution and then 42.4 mL of the above-prepared seed particle solution was added thereto. Further, a 0.5 mM aqueous silver nitrate solution (79.6 mL) was added thereto at 10 mL/min under stirring (the first growth step of flat particles).

Next, the above-obtained solution was stirred for 30 min, and then a 0.35 M aqueous potassium hydroquinonesulfonate solution (71.1 mL) was added thereto. Further, 200 g of a 7% by mass aqueous gelatin solution was added thereto. Separately, 0.25 M aqueous sodium sulfite solution (107 mL) and a 0.47 M aqueous silver nitrate solution (107 mL) were mixed together to prepare a mixture containing white precipitates. The thus-prepared mixture was added to the solution to which the aqueous gelatin solution had been added. Immediately after the addition of the mixture containing white precipitates, a 0.17 M aqueous NaOH solution (72 mL) was added to the resultant mixture. Here, the aqueous NaOH solution was added thereto at an addition rate adjusted so that the pH of the mixture did not exceed 10. The thus-obtained mixture was stirred for 300 min to prepare a dispersion liquid of flat silver particles (the second growth step of flat particles).

The obtained flat silver particle dispersion liquid was found to contain hexagonal flat silver particles. Also, the obtained flat silver particles were measured for various properties as follows. The results are shown in Table 1.

### (Production Example 2)

### -Production of metal nanorod-

Referring to "ACSNANO Vol. 3., No. 1., pp. 21-26," silver nanorods were produced. The produced silver nanorods were found to have a major axis of 250 nm, a minor axis of 42 nm and an aspect ratio (major axis/minor axis) of 6.

### «Evaluation of metal particles»

### -Average particle diameter and variation coefficient-

The average particle diameter of the flat silver particles was obtained as follows. Specifically, 200 particles were randomly selected from the SEM image observed. Then, image processing was performed on their shapes, with A and B corresponding respectively to substantially hexagonal or disc-like particles and amorphous particles (e.g., drop-like particles). Subsequently, particles corresponding to A were measured for equivalent circle diameter with a digital caliper. The average value of the equivalent circle diameters was defined as an average particle diameter. Moreover, the standard deviation of the equivalent circle diameters was divided by the average particle diameter to obtain variation coefficient (%).

### -Average particle thickness-

The dispersion liquid containing flat silver particles was dropped on a glass substrate, followed by drying. Then, the thickness of each flat silver particle was measured with an atomic force microscope (AFM) (Nanocute II, product of Seiko Instruments Inc.). Notably, the measurement conditions of AFM were as follows: self-detection sensor, DFM mode, measurement range: 5 µm, scanning speed: 180 sec/frame and the number of data: 256 × 256.

### -Aspect ratio-

The average particle diameter was divided by the average particle thickness to obtain an aspect ratio of the obtained flat silver particles (average particle diameter/average particle thickness).

**Table 1**

| | Shape | Ratio of flat metal particles (or rods) (% by number) | Average particle diameter (nm) | Average particle thickness (nm) | Aspect ratio | Variation coefficient of particle size distribution (%) |
|---|---|---|---|---|---|---|
| Production Example 1 | Substantially hexagonal | 84 | 230 | 16 | 14.3 | 28 |
| Production Example 2 | Rod | 93 | (250) | (42) | (6) | 17 |

| | | | | | | |
|---|---|---|---|---|---|---|
| *In the rods in Table 1, the average particle diameter is the major axis thereof, the average particle thickness is the minor axis thereof, and the aspect ratio is a value obtained by dividing the average particle diameter with the average particle thickness | | | | | | |

### (Example 1)

### <Sample No. 104>

### -Production of a heat ray-shielding material-

First, 1 N NaOH (0.75 mL) was added to the flat silver particle dispersion liquid (16 mL) of Production Example 1. Then, ion-exchanged water (24 mL) was added to the resultant mixture, followed by centrifugating with a centrifuge (product of KOKUSAN Co., Ltd., H-200N, Angle Rotor BN) at 5,000 rpm for 5 min, to thereby precipitate hexagonal flat silver particles. The supernatant after the centrifugation was removed and then water (5 mL) was added thereto to re-disperse the precipitated hexagonal flat silver particles. Thereafter, 1.6 mL of a 2% by mass solution of compound W-1 having the following structural formula in water and methanol was added to the resultant dispersion liquid for preparing a coating liquid. The thus-prepared coating liquid was applied onto a polyethylene terephthalate (PET) film with a wire coating bar No. 14, followed by drying, to thereby obtain a film on which hexagonal flat silver particles were fixed.

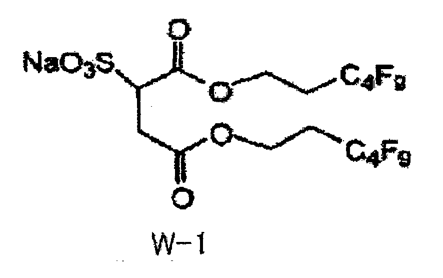

The hexagonal flat silver particles were fixed on the PET film without aggregation. Through the above procedure, a heat ray-shielding material of sample No. 104 was produced.

### <Sample No. 101>

### -Production of a heat ray-shielding material-

The procedure of sample No. 104 was repeated, except that the flat silver particle dispersion liquid of Production Example 1 was changed to the silver nanorod dispersion of Production Example 2, to thereby produce a heat ray-shielding material of sample No. 101.

### <Sample No. 102>

### -Production of a heat ray-shielding material-

The procedure of sample No. 101 was repeated, except that Comparative Compound A having the following structural formula was added in an amount of 3.0 × 10⁻³ mole relative to 1 mole of silver contained in the silver nanorod dispersion of Production Example 2, to thereby produce a heat ray-shielding material of sample No. 102.

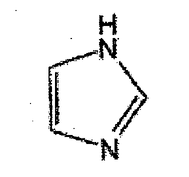

### Comparative Compound A EAg: -1 mV

### <Sample No. 103>

### -Production of a heat ray-shielding material-

The procedure of sample No. 101 was repeated, except that Compound at-12 having the following structural formula was added in an amount of 3.0 × 10⁻³ mole relative to 1 mole of silver contained in the silver nanorod dispersion of Production Example 2, to thereby produce a heat ray-shielding material of sample No. 103.

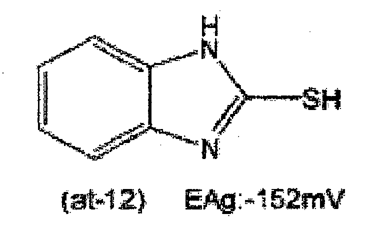

### <Sample No. 105>

### -Production of a heat ray-shielding material-

The procedure of sample No. 104 was repeated, except that Comparative Compound A having the above structural formula was added in an amount of 3.0 × 10⁻³ mole relative to 1 mole of silver contained in the flat silver particle dispersion of Production Example 1, to thereby produce a heat ray-shielding material of sample No. 105.

### <Sample No. 106>

### -Production of a heat ray-shielding material-

The procedure of sample No. 104 was repeated, except that Comparative Compound B having the following structural formula was added in an amount of 3.0 × 10⁻³ mole relative to 1 mole of silver contained in the flat silver particle dispersion of Production Example 1, to thereby produce a heat ray-shielding material of sample No. 106.

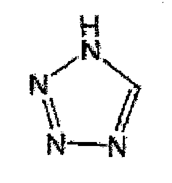

### Comparative Compound EAg: 57 mV

### (Sample No. 107)

### -Production of a heat ray-shielding material-

The procedure of sample No. 104 was repeated, except that Compound at-12 having the above structural formula was added in an amount of 3.0 × 10⁻³ mole relative to 1 mole of silver contained in the flat silver particle dispersion of Production Example 1, to thereby produce a heat ray-shielding material of sample No. 107.

### <Sample No. 108>

### -Production of a heat ray-shielding material-

The procedure of sample No. 104 was repeated, except that Compound at-20 having the following structural formula was added in an amount of 3.0 × 10⁻³ mole relative to 1 mole of silver contained in the flat silver particle dispersion of Production Example 1, to thereby produce a heat ray-shielding material of sample No. 108.

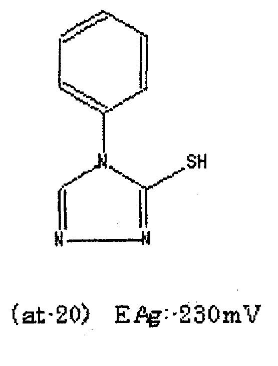

### <Sample No. 109>

### -Production of a heat ray-shielding material-

The procedure of sample No. 104 was repeated, except that Compound at-21 having the following structural formula was added in an amount of 3.0 × 10⁻³ mole relative to 1 mole of silver contained in the flat silver particle dispersion of Production Example 1, to thereby produce a heat ray-shielding material of sample No. 109.

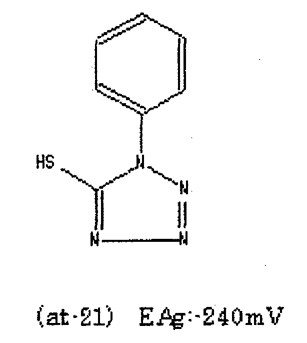

### <Sample No. 110>

### -Production of a heat ray-shielding material-

The procedure of sample No. 104 was repeated, except that Compound at-11 having the following structural formula was added in an amount of 3.0 × 10⁻³ mole relative to 1 mole of silver contained in the flat silver particle dispersion of Production Example 1, to thereby produce a heat ray-shielding material of sample No. 110.

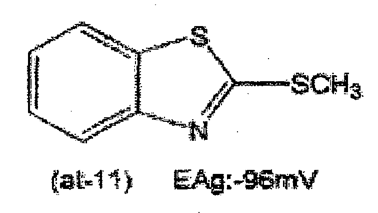

### <Sample No. 111>

### -Production of a heat ray-shielding material-

The procedure of sample No. 104 was repeated, except that Compound at-19 having the following structural formula was added in an amount of 3.0 × 10⁻³ mole relative to 1 mole of silver contained in the flat silver particle dispersion of Production Example 1, to thereby produce a heat ray-shielding material of sample No. 111.

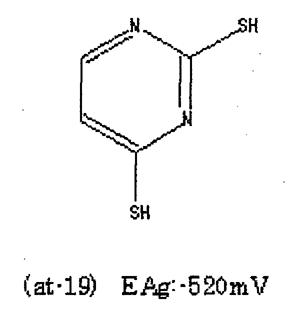

Next, each of the thus-produced heat ray-shielding materials was evaluated for various properties. The results are shown in Table 1.

### «Evaluation of heat ray-shielding materials»

### -Visible light transmission spectrum and heat ray reflection spectrum-

Each of the produced heat ray-shielding materials was measured for transmission spectrum and reflection spectrum according to the JIS evaluation standard for automotive glass.

The transmission and reflection spectra were evaluated with a UV-Vis near infrared spectrophotometer (product of JASCO Corporation, V-670). The evaluation was performed using an absolute reflectance measurement unit (ARV-474, product of JASCO Corporation). Here, incident light was caused to pass through a 45° polarization plate so as to become substantially non-polarized light.

### -Infrared ray maximum reflectance·visible light transmittance-

The heat ray maximum reflectance was measured according to the method of JIS-R3106: 1998 "Testing method on transmittance, reflectance and emittance of flat glasses and evaluation of solar heat gain coefficient." After initial measurement ranging from 300 nm to 2,100 nm, the maximum reflectance was defined as the infrared ray maximum reflectance. Specifically, using SUPER XENON WEATHER METER SX-75 (product of Suga Test Instruments Co., Ltd.), each heat ray-shielding material was irradiated with xenon light for 4 weeks under the conditions: 180 W/m², black panel temperature: 63°C and humidity: 25%RH, and then the maximum reflectance of the material was defined as the infrared ray maximum reflectance.

Meanwhile, the visible light transmittance was measured as follows. Each heat ray-shielding material was measured for transmittance with respect to each wavelength ranging from 380 nm to 780 nm, and the thus-measured transmittances were corrected with the luminosity factor of each wavelength.

### <Area ratio>

Each of the obtained heat ray-shielding materials was observed under a scanning electron microscope (SEM). The obtained SEM image was binarized to determine an area ratio of (B/A) × 100, where A and B denote respectively a projected area of the substrate and the total value of projected areas of the flat metal particles when the heat ray-shielding material is viewed from a perpendicular direction.

### <Plane orientation (tilt angle of flat metal particles)>

Each of the obtained heat ray-shielding materials was embedded in an epoxy resin, followed by freezing in liquid nitrogen. In this state, the freezed product was cut with a razor to prepare a vertically cross-sectional sample of the heat ray-shielding material. The thus-prepared vertically cross-sectional sample was observed under a scanning electron microscope (SEM). Then, 100 flat metal particles were examined for tilt angle with respect to the horizontal surface of the substrate, to calculate the average tilt angle of the flat metal particles.

### -Measurement of haze value-

Using a haze meter (NDH-5000, NIPPON DENSHOKU INDUSTRIES CO., LTD.), each heat ray-shielding material was measured for haze value (%).

**Table 2-1**

| Sample No. | Particle | Heterocyclic ring compound | | | Visible light (550nm) | Initial | | After Xe irradiation | | |
|---|---|---|---|---|---|---|---|---|---|---|
| | | | | | | Infrared light (800mn to 2000nm) | | Infrared light (800nm to 2000nm) | | |
| | | Compd. | EAg (mV) | Amount (mol) | Transmittance (%) | Max. reflectance (%) | Max. absorbance (%) | Max. reflectance (%) | Max. absorbance (%) | |
| 101 | Rod | - | - | - | 85 | 7 | 43 | 7 | 42 | Comp. Ex. |
| 102 | Rod | Comp. Compd. A | -1 | 3×10⁻³ | 85 | 8 | 43 | 8 | 42 | Comp. Ex. |
| 103 | Rod | at-12 | -152 | 3×10⁻³ | 85 | 8 | 42 | 8 | 41 | Comp. Ex. |
| 104 | Flat | - | - | - | 80 | 58 | 8 | 40 | 15 | Comp. Ex. |
| 105 | Flat | Comp. Compd. A | -1 | 3×10⁻³ | 78 | 56 | 9 | 42 | 13 | Comp. Ex. |
| 106 | Flat | Comp. Compd. B | 57 | 3×10⁻³ | 76 | 57 | 7 | 40 | 16 | Comp. Ex. |
| 107 | Flat | at-12 | -152 | 3×10⁻³ | 79 | 55 | 8 | 50 | 10 | Present Invention |
| 108 | Flat | at-20 | -230 | 3×10⁻³ | 78 | 57 | 8 | 55 | 9 | Present Invention |
| 109 | Flat | at-21 | -240 | 3×10⁻³ | 79 | 54 | 9 | 54 | 9 | Present Invention |
| 110 | Flat | at-11 | -96 | 3×10⁻³ | 78 | 58 | 8 | 57 | 9 | Present Invention |
| 111 | Flat | at-19 | -520 | 3×10⁻³ | 77 | 57 | 4 | 51 | 9 | Present Invention |

**Table 2-2**

| Sample No. | Tilt angle of flat metal particles | Area ratio (%) | Haze value (%) | |
|---|---|---|---|---|
| 101 | - | - | 0.9 | Comp. Ex. |
| 102 | - | - | 0.8 | Comp. Ex. |
| 103 | - | - | 0.8 | Comp. Ex. |
| 104 | 5° | 45 | 1.2 | Comp. Ex. |
| 105 | 5° | 45 | 1.2 | Comp. Ex. |
| 106 | 5° | 45 | 1.2 | Comp. Ex. |
| 107 | 5° | 45 | 1.2 | Present Invention |
| 108 | 5° | 45 | 1.2 | Present Invention |
| 109 | 5° | 45 | 1.3 | Present Invention |
| 110 | 5° | 45 | 1.1 | Present Invention |
| 111 | 5° | 45 | 1.2 | Present Invention |

As is clear from Table 2-1, the heat ray-shielding materials of the present invention were found to exhibit a higher infrared reflectance than those of the heat ray-shielding materials of Comparative Examples. In addition, the heat ray-shielding materials of the present invention did not decrease in infrared reflectance after irradiation of Xe light than did the heat ray-shielding materials of Comparative Examples.

In the flat metal particle-containing composition of the present invention, the flat metal particles exist more stably and reduction of plasmon reflection due to light can be prevented. Thus, the flat metal particle-containing composition can be suitably used in, for example, a heat ray reflection film, an infrared ray reflection film, a visible light reflection film, a heat ray absorption film, an infrared ray absorption film and a selective reflection film.

Furthermore, the heat ray-shielding material of the present invention has high selectivity for reflection wavelength or region, has excellent transmittance with respect to visible light and radio wave and has excellent light resistance, and thus, can be suitably used as various members required for shielding heat rays, such as glass of vehicles (e.g., automobiles and buses), building glass and agricultural films.

## Claims

1. A composition comprising:
flat metal particles having two main planes, and
a heterocyclic ring compound having a silver interaction potential EAg which is lower than -1 mV;
wherein the average particle diameter of the flat metal particles is from 70 nm to 500 nm, and the value L/d of the flat metal particles is from 2 to 80, where L denotes the average particle diameter of the flat metal particles and d denotes the average particle thickness of the flat metal particles.

2. A composition according to Claim 1, wherein the silver interaction potential EAg of the heterocyclic ring compound is -300 mV or higher but lower than -1 mV.

3. A composition according to Claim 1, wherein the flat metal particles contain silver, gold, copper or an alloy thereof.

4. A composition according to Claim 3, wherein the flat metal particles contain silver.

5. The use of a composition according to Claim 1 as a heat ray reflection film, an infrared ray reflection film, a heat ray absorption film, an infrared ray absorption film or a selective reflection film.

6. A heat ray-shielding material comprising a substrate and a layer of the composition as defined in Claim 1 on the substrate.

7. A heat ray-shielding material according to Claim 6, wherein the main planes of the flat metal particles in the composition are plane-oriented at 0° to ±30° with respect to a surface of the substrate.

8. A heat ray-shielding material according to Claim 7, which has an area ratio of 15% or higher, the area ratio being calculated by B/A x 100, where A and B denote the projected area of the substrate and the total value of projected areas of the flat metal particles, respectively, when the heat ray-shielding material is viewed from a perpendicular direction.

## Patentansprüche

1. Zusammensetzung, umfassend:
flache Metallpartikel, die zwei Hauptebenen aufweisen, und
eine heterocyclische Ringverbindung, die ein Silber-Wechselwirkungspotential EAg aufweist, welches kleiner als -1 mV ist;
worin der mittlere Partikeldurchmesser der flachen Metallpartikel von 70 bis 500 nm beträgt und der Wert L/d der flachen Metallpartikel von 2 bis 80 beträgt, worin L den mittleren Partikeldurchmesser der flachen Metallpartikel bezeichnet und d die mittlere Partikeldicke der flachen Metallpartikel bezeichnet.

2. Zusammensetzung gemäß Anspruch 1, worin das Silber-Wechselwirkungspotential EAg der heterocyclischen Ringverbindung -300 mV oder höher, jedoch niedriger als -1 mV ist.

3. Zusammensetzung gemäß Anspruch 1, worin die flachen Metallpartikel Silber, Gold, Kupfer oder eine Legierung hiervon enthalten.

4. Zusammensetzung gemäß Anspruch 3, worin die flachen Metallpartikel Silber enthalten.

5. Verwendung einer Zusammensetzung gemäß Anspruch 1 als Wärmestrahlen-reflektierender Film, Infrarotstrahlenreflektierender Film, Wärmestrahlen-absorbierender Film, Infrarotstrahlen-absorbierender Film oder selektiv reflektierender Film.

6. Wärmestrahlen-abschirmendes Material, umfassend ein Substrat und eine Schicht der Zusammensetzung gemäß Anspruch 1 auf dem Substrat.

7. Wärmestrahlen-abschirmendes Material gemäß Anspruch 6, worin die Hauptebenen der flachen Metallpartikel in der Zusammensetzung in Winkeln von 0° bis ±30° in Bezug auf die Oberfläche des Substrats ebenenorientiert sind.

8. Wärmestrahlen-abschirmendes Material gemäß Anspruch 7, welches ein Flächenverhältnis von 15 % oder höher aufweist, worin das Flächenverhältnis durch B/A x 100 berechnet wird, worin A und B die Projektionsfläche des Substrats bzw. die Summe der Projektionsflächen der flachen Metallpartikel bezeichnen, wenn das Wärmestrahlen-abschirmende Material aus rechtem Winkel betrachtet wird.

## Revendications

1. Composition comprenant :
des particules métalliques plates ayant deux plans principaux, et
un composé cyclique hétérocyclique ayant un potentiel d'interaction avec l'argent EAg qui est inférieur à -1 mV ;
où le diamètre de particule moyen des particules métalliques plates est de 70 nm à 500 nm, et la valeur L/d des particules métalliques plates est de 2 à 80, où L désigne le diamètre de particule moyen des particules métalliques plates et d désigne l'épaisseur de particule moyenne des particules métalliques plates.

2. Composition selon la revendication 1, où le potentiel d'interaction avec l'argent EAg du composé cyclique hétérocyclique est -300 mV ou plus mais inférieur à -1 mV.

3. Composition selon la revendication 1, où les particules métalliques plates contiennent de l'argent, de l'or, du cuivre ou un alliage de ceux-ci.

4. Composition selon la revendication 3, où les particules métalliques plates contiennent de l'argent.

5. Utilisation d'une composition selon la revendication 1 comme film de réflexion des rayons thermiques, film de réflexion des rayons infrarouges, film d'absorption des rayons thermiques, film d'absorption des rayons infrarouges ou film de réflexion sélective.

6. Matériau de protection contre les rayons thermiques comprenant un substrat et une couche de la composition telle que définie dans la revendication 1 sur le substrat.

7. Matériau de protection contre les rayons thermiques selon la revendication 6, où les plans principaux des particules métalliques plates dans la composition sont orientés à 0° à ±30° par rapport à une surface du substrat.

8. Matériau de protection contre les rayons thermiques selon la revendication 7 qui a un rapport d'aires de 15 % ou plus, le rapport d'aires étant calculé par B/A x 100, où A et B désignent l'aire projetée du substrat et la valeur totale des aires projetées des particules métalliques plates, respectivement, quand le matériau de protection contre les rayons thermiques est observé depuis une direction perpendiculaire.
